Europäisches Patentamt

European Patent Office

Office européen des brevets

(11) Publication number: **0 088 449**
A2

## EUROPEAN PATENT APPLICATION

(21) Application number: 83102362.7

(22) Date of filing: 10.03.83

(51) Int. Cl.³: **G 05 B 19/18**

(30) Priority: 10.03.82 JP 37603/82

(43) Date of publication of application: 14.09.83
Bulletin 83/37

(84) Designated Contracting States: DE FR GB

(71) Applicant: MITSUBISHI DENKI KABUSHIKI KAISHA, 2-3, Marunouchi 2-chome Chiyoda-ku, Tokyo 100 (JP)

(72) Inventor: Tanaka, Hitoshi c/o Mitsubishi Denki K. K., Nagoya Works No. 1-14, Yadaminami 5-chome, Higashi-ku Nagoya-shi Aichi (JP)

(74) Representative: Lehn, Werner, Dipl.-Ing. et al, Hoffmann, Eitle & Partner Patentanwälte Arabellastrasse 4 (Sternhaus), D-8000 München 81 (DE)

(54) Numerical control machining system.

(57) A numerical control machining system in which a surface machining pattern to be executed is classified as being one of a group of fundamental machining patterns stored in the system. Following specification of at least one inside and/or outside machining limit (40a) which defines a machining region of a workpiece (40), an optimum machining locus (100) is automatically determined for a specified tool according to the selected machining pattern. Then the workpiece (40) is machined along said locus (100).

## NUMERICAL CONTROL MACHINING SYSTEM

This invention relates to a numerical control machining system (hereinafter referred to as "an NC machining system", when applicable) in which a numerical control apparatus (hereinafter referred to merely as "an NC", when applicable) controls a machining apparatus to machine a workpiece, and more particularly to an NC machining system in which the moste suitable machining locus is determined for a tool, and a workpiece is machined along the machining locus thus determined.

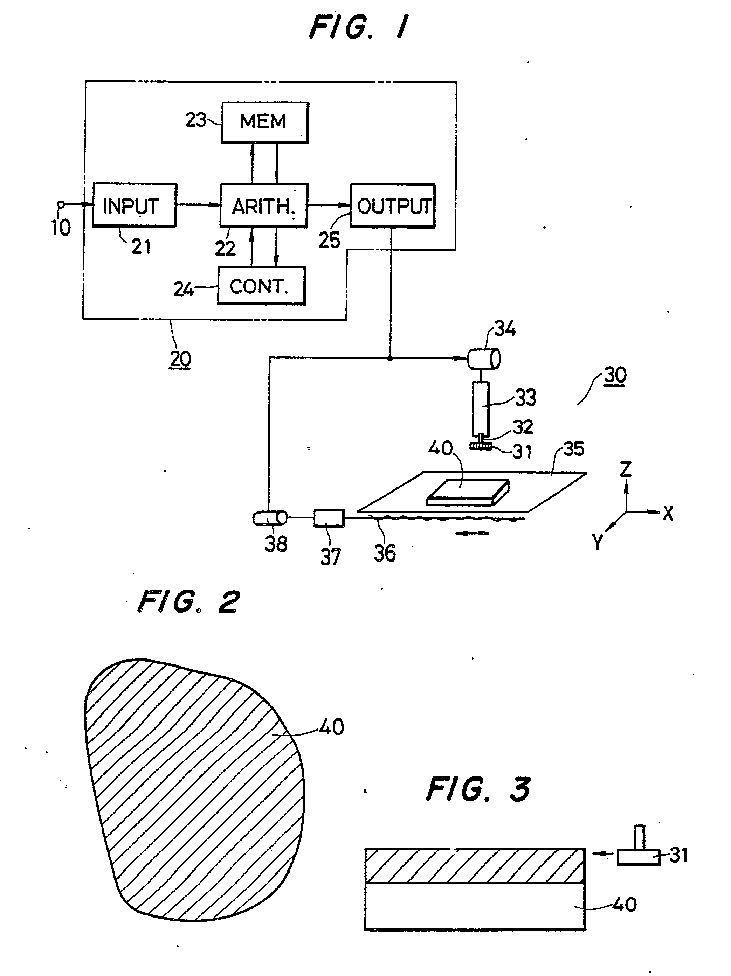

In an NC machining apparatus (hereinafter referred to as "an NC machining apparatus", when applicable) controlled by an NC, the position of a tool with respect to the workpiece is instructed by corresponding numerical data, calculations are carried out by the NC, and the workpiece is machined, being controlled with the calculated data. With the NC machining apparatus, articles of intricate configuration can be readily provided with high accuracy and productivity can be improved. In general, the NC machining apparatus is constructed as shown in Fig. 1, and comprises an NC 20 for operating upon numerical data inputted through a terminal 10 and a machining apparatus 30 which is controlled by operation values from the NC 20. The NC 20 comprises: an input section 21 to which external instructions are applied; an arithmetic section 22 for operating upon instructions from the input section 21; a memory section 23 for storing the computation results of the arithmetic section 22 and instructions from the input section; a control section 24 for controlling the operation of the arithmetic section 22; and an output section 25 for outputting arithmetic values such as the operation results of the arithmetic section 22. On the other hand, in the machining apparatus 30, a tool 31 is mounted on a tool holder 32, which is secured to the chuck of a spindle 33. The spindle 33 is rotated by a spindle motor 34 which is driven by signals from the output section 25 of the NC 20. A workpiece 40 is secured to the table 35 of the apparatus 30 with a jig or the like.

In Fig. 1, reference numeral 36 designates a ball screw for moving the table 35 in the direction of the X-axis. The ball screw 36 is driven through a gear box 37 by an X-axis feed motor 38 which is driven by a signal from the output section 25 of the NC 20. Similarly as in the mechanism for moving the table 35 in the direction of X-axis with the X-axis drive motor 38 and the ball screw 36, mechanisms for moving the table 35 in the direction of the Y-axis and in the direction of the Z-axis (not shown) are provided. These mechanisms are likewise driven by signals from the NC 20.

In the NC machining system, a machining locus is determined for the tool 31 in advance, so that the workpiece 40 is machined according to the machining locus thus determined.

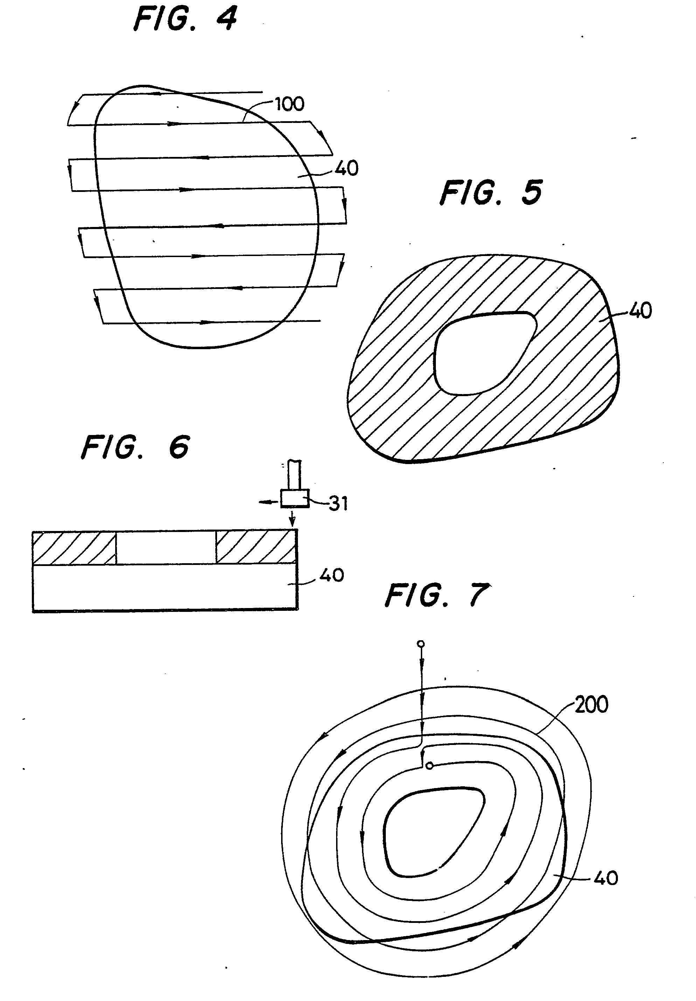

Figs. 2 and 3 show the face mill machining of a workpiece 40. In these Figures, the part shaded with oblique lines is machined. Fig. 2 is a top view of the workpiece, and Fig. 3 is a side view of the same. In face mill machining, the tool 31 is applied to the side of the workpiece 40 as shown in Fig. 2. In face mill machining as seen in Fig. 3, it is necessary to determine a machining locus 100 for the tool (not shown) as shown in Fig. 4.

Figs. 5 and 6 show a workpiece 40 which is subjected to end mill mount machining. In Figs. 5 and 6, the part to be machined is shaded with oblique lines. Fig. 5 is a top view of the workpiece 40, and Fig. 6 is a side view of the same. In end mill mount machining, as shown in Fig. 6, an end mill is employed as tool, and the workpiece 40 is machined from the side or top so that a mount is left at the center. In forming the end mill mount as shown in Figs. 5 and 6, it is necessary to determine a machining locus 200 for the tool (not shown) as shown in Fig. 7.

A conventional NC machining system suffers from difficulties that it is intricately difficult to determine the machining locus for the tool. In other words, the conventional NC machining system has a drawback such that, as the machining locus is determined for the tool according to a design drawing, it is rather complicated to determine the machining locus. More specifically, in the conventional NC machining system, the operator calculates the machining region of the workpiece form the design drawing and then determines the tool's machining locus by taking into consideration the clearance from a non-machined part of the workpiece, the kind of a tool to be used, the diameter of the tool and the positional relationships between the workpiece and the tool, so that the workpiece may be machined according to the machining locus thus determined. Therefore, the conventional NC machining system is disadvantageous in that it is troublesome to determine a proper machining locus for the tool and the work efficiency is accordingly low.

In view of the foregoing, an object of this invention is to provide an NC machining system in which a most suitable machining locus can be automatically determined for a given tool.

Another object of the invention is to provide an NC machining system having improved work efficiency.

A further object of the invention is to provide an NC machining system in which the above described burden on the operator is eliminated and wherein machining is automatically achieved.

The foregoing and other objects of the invention have been achieved by the provision of an NC machining system in which surface machining processes are classified into fundamental machining patterns, at least one inside and/or outside machining limit adapted to define a machining region for a workpiece is specified an optimum machining locus is automatically determined for a given tool according to a selected machining pattern and a specified machining limit, and the workpiece is machined along the machining locus thus determined.

The nature, principle and utility of the invention will become more apparent from the following detailed description when read in conjunction with the accompanying drawings, in which

Fig. 1 is an explanatory diagram for describing of the construction of an NC machining apparatus;

Figs. 2 and 3 are diagrams showing a workpiece subjected to face mill machining, and more specifically Fig. 2 is a plan view of the workpiece, while Fig. 3 is a sectional side view of the same;

Fig. 4 is an explanatory diagram showing one example of the machining locus of a tool in the face mill machining process;

Figs. 5 and 6 are diagrams showing a workpiece subjected to end-mill mount machining, and more specifically Figs. 5 and 6 are a plan view and a sectional side view of the workpiece, respectively;

Fig. 7 is an explanatory diagram showing one example of the machining locus of a tool in an end mill mount machining process;

Fig. 8 is a sectional side view of a workpiece, showing the face mill machining process;

Fig. 9 is a perspective view of a workpiece which has been subjected to face mill machining;

Fig. 10 is a sectional side view of a workpiece, showing an end mill plane machining process;

Fig. 11   is a perspective view of a workpiece which has been subjected to end mill plane machining;

Fig. 12   is a sectional side view of a workpiece, showing an end mill mount machining process;

Fig. 13   is a perspective view of a workpiece which has been subjected to end mill mount machining;

Fig. 14.  is a sectional side view of a workpiece, showing a pocket end mill machining process;

Fig. 15   is a perspective view of a workpiece which has been subjected to pocket end mill machining;

Fig. 16   is a sectional side view of a workpiece, showing a pocket end mill valley machining process;

Fig. 17   is a perspective view of a workpiece which has been subjected to pocket end mill valley machining;

Fig. 18   is a sectional side view of a workpiece, showing a pocket end mill mount machining process; -

Fig. 19   is a perspective view of a workpiece which has been subjected to pocket end mill mount machining;

Fig. 20   is a perspective view of a workpiece which has been subjected to end mill slot machining;

Fig. 21   is an explanatory diagram showing a machining locus for a face mill machining process according to an NC machining system of the invention;

Fig. 22 is a diagram describing of the relation between the approach point A and the cutting start point B of a tool with respect to a workpiece;

Fig. 23 is a diagram for describing the input of a machining limit into the NC;

Fig. 24 is a diagram describing a configuration spaced by an offset distance $\ell_3$ away from the machining limit;

Fig. 25 is an explanatory diagram showing a machining locus for an end mill mount machining process according to the NC machining system of the invention;

Fig. 26 is a diagram describing an escape point C;

Fig. 27 is an explanatory diagram for describing of a configuration spaced by an offset amount from a machining limit;

Fig. 28 is an explanatory diagram showing a machining locus for a pocket end mill machining process according to the NC machining system of the invention, and

Fig. 29 is an explanatory diagram showing a machining locus for a pocket end mill mount machining process according to the NC machining system of the invention.

One preferred embodiment of the invention will now be described with reference to the accompanying drawings.

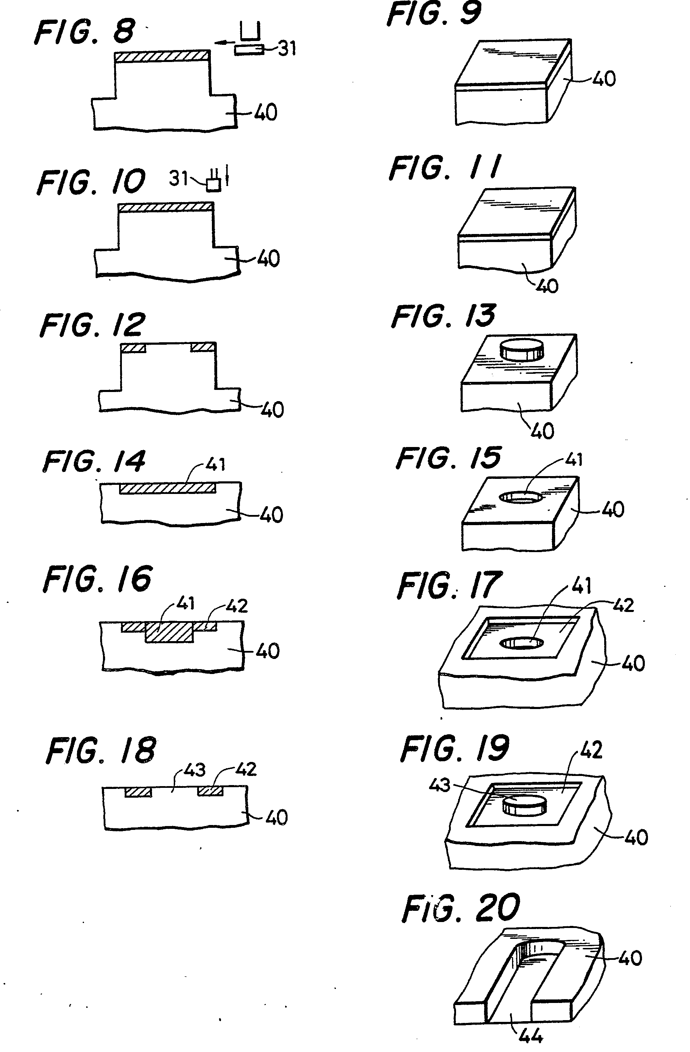

Figs. 8 through 20 show fundamental surface machining patterns. In other words, Figs. 8 and 9 show a face mill machining process; Figs. 10 and 11, an end mill plane machining process; Figs. 12 and 13, an end mill mount machining process; Figs. 14 and 15, a pocket end mill machining process; Figs. 16 and 17, a pocket end mill valley machining process; Figs. 18 and 19, a pocket end mill mount machining process; and Fig. 20, an end mill slot machining process.

Figs. 8, 10, 12, 14, 16 and 18 are sectional views of the machined workpieces, and Figs. 9, 11, 13, 15, 17, 19 and 20 are perspective views thereof. In the Figures, the machined portions are shaded with oblique lines. In the end mill plane machining process shown in Figs. 10 and 11, its tool 31 is an end mill with which the upper surface of the workpiece 40 is machined. In the pocket end mill machining process shown in Figs. 14 and 15, the tool 31 is an end mill with which a pocket 41 is formed in the workpiece 40. In the pocket end mill valley machining process shown in Figs. 16 and 17, the tool 31 is an end mill, with which a valley 42 is formed and then a pocket 41 is formed. In the pocket end mill mount machining process in Figs. 18 and 19, the tool 31 is an end mill with which a valley 42 is formed in such a manner that a mount 43 remains at the center. In the end mill slot machining process shown in Fig. 20, the tool 31 is an end mill with which a slot 44 is formed by machining the workpiece 40 from one end.

Surface machining patterns are classified fundamentally as described above. Almost all kinds of surfaces can be machined according to the above-described patterns.

This invention utilizes the fact that surface machining processes can be classified into fundamental machining patterns. In this embodiment, seven kinds of machining patterns as shown in Figs. 8 through 20 are employed. A specific feature of this embodiment resides in that when one or both of the inside and outside machining limits defining the machining region of a workpiece 40 are specified, the given tool's best machining locus is automatically determined according to the classified machining patterns and the specified machining limits.

The inside and outside machining limits for defining the machining region of a workpiece 40 are for example as follows: In the face mill machining pattern shown in Figs. 8 and 9, the peripheral end of the workpiece 40 is the outside machining limit, and there is no inside machining limit. In the end mill mount machining process shown in Figs. 12 and 13, the peripheral end of the workpiece 40 is the outside machining limit, and the periphery of the mount is the inside machining limit.

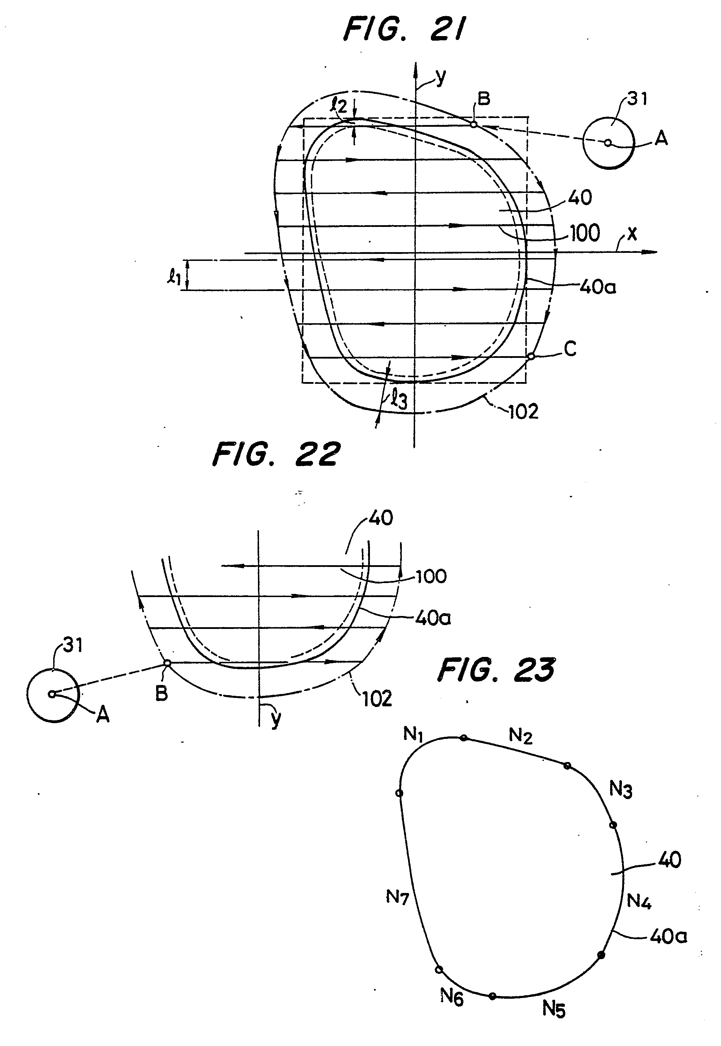

Fig. 21 shows a workpiece 40 which is subjected to face mill machining similarly as in Figs. 2 and 3. First, the face mill machining pattern is specified, and then an outer periphery 40a (hereinafter referred to as a machining limit 40a) of the machining region of the workpiece 40 is specified. As a result, the best machining locus of tool 31 is automatically determined according to the face mill machining pattern and the machining limit 40a.

It is suitable, in Fig. 21, that the distance $\ell_1$ between

the machining locus 100 be smaller than the machining width of the tool 31 (or, where the tool is cylindrical, its diamter). Therefore, the distance $\ell_1$ should be as follows:

$$\ell_1 = (\text{tool diamter}) \times w$$

where w is a selectable parameter (0.6 to 0.8).

Furthermore, the distance $\ell_2$ between the machining limit 40a and the machining locus 100 should be as follows:

where w is the above parameter (0.6 to 0.8).

In addition, the offset distance $\ell_3$ between the machining limit 40a and a tool limit 102, at the outside of which the tool does not contact with the workpiece 40, should be as follows:

$$\ell_3 = (\text{tool diamter})/2 + (\text{clearance length K})$$

where K is a constant which is predetermined in accordance with a workpiece being machined.

In Fig. 21, the workpiece 40 is divided into four regions along an X-axis and a Y-axis, and the region of the cutting start point B is determined according to each region including an approach point A.

Similarly, in Fig. 22, the region of the cutting start point B is determined from the region including approach point A.

In Fig. 21, the tool 31 is quickly forwarded to the cutting start point B from the approach point A, and the machining is ended at an escape point C.

The procedure for determining the machining locus in the face mill machining process of a workpiece 40 will now be described in more detail.

First, the relation between the machine original point of an NC machining apparatus and the program original point for forming a machining locus program is inputted into the NC. Then, the face mill machining pattern is specified Thereafter, the outside machining limit 40a of the machining region of the workpiece 40 is inputted to the NC. In this case, the configuration of the machining limit 40a is divided into arcuate and linear blocks so as to be inputted into the memory of the NC. That is, as shown in Fig. 23, the machining limit 40a is divided into arcs $N_1$, $N_3$, $N_4$, $N_5$ and $N_6$ and straight lines $N_2$ and $N_7$, for instance. The coordinates of the end of each of these segments are inputted with the program original point as the reference, and the classifications of arc and straight line and the radii of the arcs are inputted into the NC. Thus, the configuration of the machining limit 40a has been inputted.

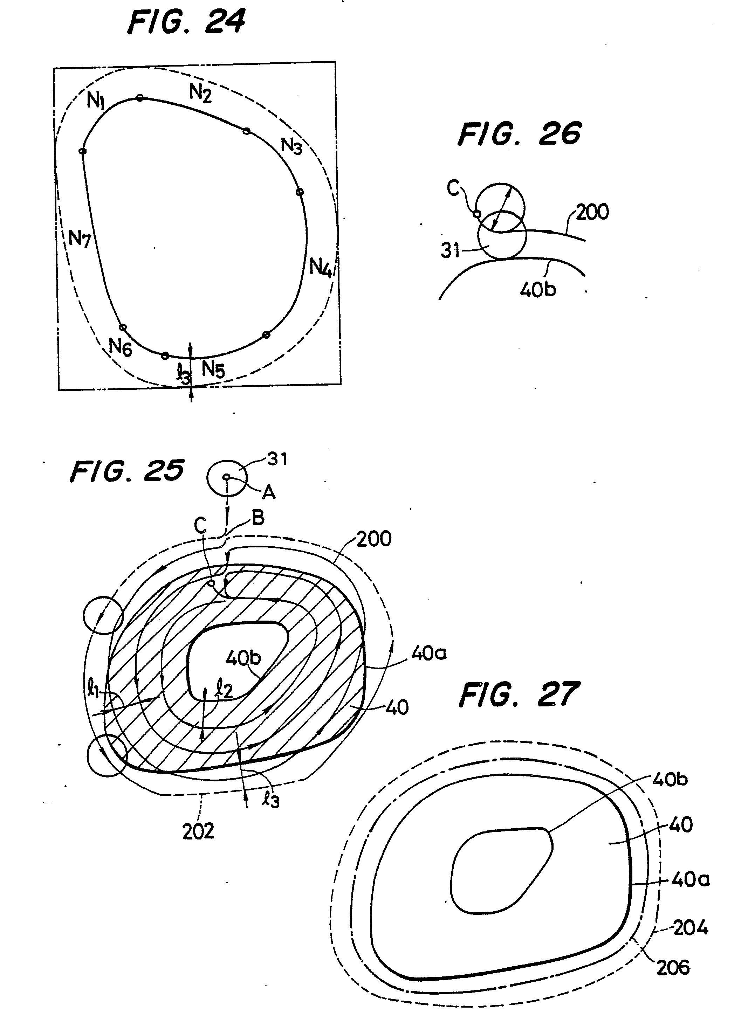

Next, the NC calculates the offset distance $\ell_3$ from the machining limit 40a according to a tool diameter determined when face mill machining is specified, the machining limit 40a inputted and the clearance length determined in accordance with the tool diameter and the input data, so that a configuration which is outside of the machining limit 40a by the offset distance $\ell_3$ as indicated by the broken line in Fig. 24 is stored in correspondance to the above-described blocks $N_1$ through $N_7$. Then, the maximum and minimum coordinates of the broken line configuration of Fig. 24 are obtained to calculate the range (indicated by the one-dot chain line in Fig. 24) of the broken line configuration from the program original point, to thereby determine the machining region. The distance $\ell_1$ between machining loci 100 is calculated from the tool diameter and the amount of machining overlap. The broken line configuration in Fig. 24 is divided by the distance $\ell_1$ according to the machining direction conditions, to thereby obtain linear parts of the machining locus 100. Under this condition, the intersections of the broken line configuration and the above-described straight lines are obtained. A locus obtained by successively connecting these intersections is stored, as the remaining part of the machining locus 100 of the tool, in the memory. The tool 31 is then moved along the complete machining locus, so that the workpiece 40 is subjected to face mill machining. In the machining, interpolation between the program original point and the machine original point is carried out.

In Fig. 21, the cutting start point B is located at the point obtained by adding the clearance length to the point where the machining locus 100 first intersects the broken line configuration.

The approach point A is specified by the programmer; however, if not specified the cutting start point B is employed as the approach point A.

The tool 31 is quickly forwarded to the cutting start point B, and then quick forwarding is changed over to the cutting speed, thus following the machining locus 100. In practice, a workpiece 40 is variable in machining allowance. Accordingly, the cutting start point B is somewhat apart from the point at which cutting is actually started, and this distance is the "clearance". The tool 31 is quickly forwarded when it is outside the broken line configuration in Fig. 24, and this relatively fast movement is changed over to the cutting speed when the tool comes inside the broken line configuration.

As is apparent from the above description, according to the face mill machining pattern specified and the machining limit 40a indicated the best machining locus 100 is automatically determined for the tool 31, and face mill machining of the workpiece 40 is carried out according to the machining locus thus determined.

A procedure of determining a machining locus according to the NC machining system of the invention in the case where a workpiece 40 is subjected to end mill mount machining will now be described.

Fig. 25 shows the case where an end mill machined mount is formed on the workpiece 40, similarly as in Figs. 5 and 6.

First, an end mill machined mount is specified as the machining pattern, and the inside and outside machining limits 40b and 40a of the machining region of the workpiece 40 are specified. As a result, according to the machining pattern and the machining limits 40b and 40a, the best machining locus 200 is automatically determined for the tool 31.

The machining locus 200 is an elliptic locus which is set with a certain distance from an inner periphery 40b (hereinafter referred to as an inside machining limit 40b). The machining locus 200 is obtained by calculation until a broken line configuration in Fig. 25 is obtained which is spaced by an offset distance $\ell_3'$ from the outside machining limit 40a.

When the tool is cylindrical, in Fig. 25 the distance $\ell_1$ between machining locus 200 should be as follows:

$$\ell_1 = \text{(tool diameter)} \times w$$

where w is a selectable paramter (0.2 to 0.9)

The distance $\ell_2'$ between the inside machining limit 40b and the machining locus 200 should be as follows:

$$\ell_2' = \text{(tool diameter)}/2 + \text{(finished length L)}$$

where L is a constant which is predetermined for fine machining in accordance with a workpiece being machined.

The distance $\ell_3$ between the outside machining limit 40a and a tool limit 202 indicated by the broken line should be as follows:

$$\ell_3' = \text{(tool diameter)}/2 + \text{(clearance length K')}$$

where K' is constant which is predetermined in accordance with a workpiece being machined.

In Fig. 25, the tool 31 is quickly forwarded to the cutting start point B from the approach point A, because the machining is not affected while the tool 31 is in this area. The machining is ended at the escape point C (Fig. 26). In the part of the machining locus 200 which is indicated by the broken line, the workpiece is not machined, and therefore the tool 31 is quickly forwarded.

The procedure of determining the machining locus in forming an end mill machined mount will now be described.

Similarly as in face mill machining, the machine orignal point and the program original point are set. End mill mount machining is specified as the machining pattern. The outside machining limit 40a and the inside machining limit 40b which is the periphery of the mount are input with the configuration divided into, arcuate and linear blocks. Then, a configuration 204 which is obtained by adding an offset amount to the outside machining limit 40a is calculated and stored (Fig. 27). The machining locus of the tool is outside of the configuration 204, thus not interfering with the workpiece 40. Therefore, the tool can be quickly forwarded in this case. Next, a machining locus which is spaced from the inside machining limit 40b by a distance $\ell_2$ is calculated and stored. Thereafter, a machining locus 200 which is obtained by successively adding the amount of offset, namely, the distance $\ell_1$ to the above mentioned machining locus is calculated and stored. This machining locus 200 should be calculated and stored up to the outermost locus which intersects a configuration 206 (indicated by the one-dot chain line in Fig. 27) which is obtained by adding $\ell_1/2$ to the outside machining limit 40a. According to the machining locus 200 thus stored, the workpiece is machined with the tool 31 so as to have a configuration as shown in Fig. 13. The excape point C is at a point where the machining locus 200 closest the inside machining limit 40b moves somewhat outwardly after the periphery of the mount has been machined.

As is clear from the above description, according to the end mill machined mount machining pattern selected and the inside and outside machining limits 40b and 40a specified, the best machining locus 200 is automatically determined for the tool 31, so that an end mill machined mount is formed on the workpiece 40 according to the machining locus 200 thus determined.

A procedure for determining a machining locus according to the NC machining system of the invention where a workpiece 40 is subjected to pocket end mill machining as shown in Figs. 14 and 15 will be described.

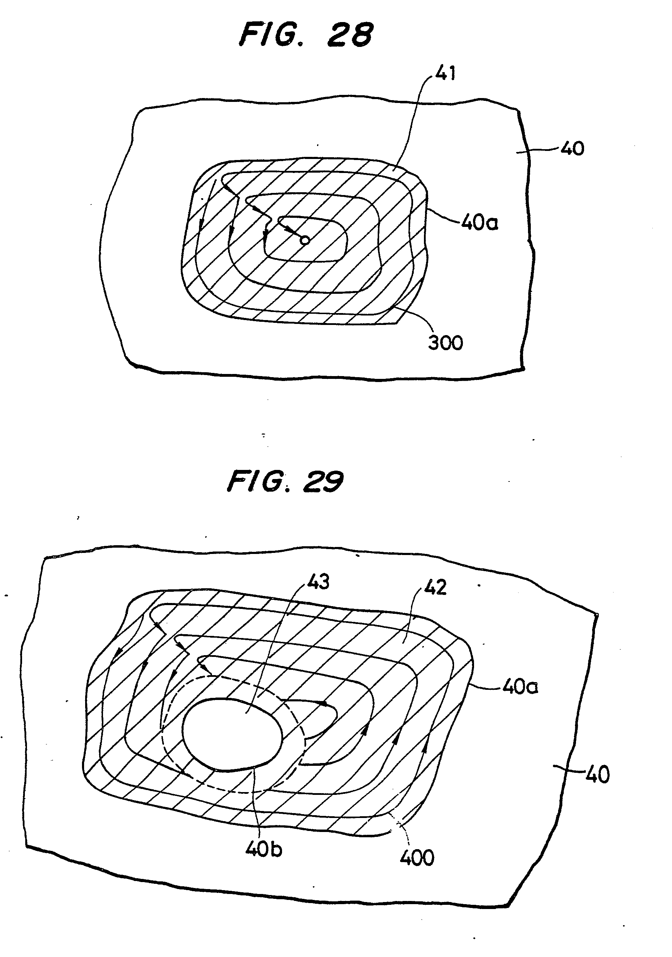

In this case, the machining locus can be now obtained similarly as in the above-described end mill mount machining. That is, as shown in Fig. 28, inwardly of the outside machining process limit 40a of the workpiece 40, the sum of the radius of the tool and the clearance is obtained as an offset amount, and a machining locus is obtained by addition of the amount of offset. By successively adding a machining locus distance to that locus, a machining locus 300 is obtained. According to the machining locus 300, the tool is moved to carry out the end mill mount machining.

A procedure for determining a machining locus according to the NC machining system of the invention in the case where a workpiece 40 is subjected to pocket end mill mount machining as shown in Figs. 18 and 19 will now be described.

In this case, the machining locus 400 can be obtained by combining the procedure of determining a machining locus for end mill mount machining as shown in Fig. 25 and the procedure of obtaining a machining locus for pocket end mill machining as shown in Fig. 28. That is, the pocket end mill mount machining is selected as the machining pattern, and the outside machining limit 40a and the inside machining limit 40a corresponding to the periphery of a mount 43 are inputted, so that a machining locus 400 which passes around the mount 43 is calculted and stored. The workpiece is then machined with the tool, which is moved along the machining locus 400 thus stored.

As is apparent from the above description, the machining loci can be obtained for the fundamental surface machining patterns according to the above-described procedures, and machining loci can be obtained for other patterns as well.

As was described above, according to the NC machining system of the invention, the most suitable machining

- 18 -

locus of the tool can be automatically obtained, which
relieves the operator of this burden and makes it
possible to automatically machine workpieces.

Claims:

1.      A numerical control machining system characterized in that: surface machining processes are classified into fundamental machining patterns; at least one inside and/or outside machining limit (40a, 40b) adapted to define a machining region for a workpiece (40) is specified; an optimum machining locus (100, 200, 300, 400) is automatically determined for a tool (31) according to a specified machining pattern and machining limit; and said workpiece (40) is machined along said machining locus.

2.      A numerical control machining system with a numerical control apparatus (20) characterized by the steps of classifying surface machining processes into fundamental machining patterns;

inputting said machining patterns into a memory section (23) in said numerical control apparatus (20);

inputting the diameter and clearance of machining tool (31) into said memory section (23);

inputting machining limits (40a, 40b) for defining a machining region for a workpiece (40) according to a selected machining pattern into said memory section (23);

calculating a machining locus distance $(\ell_1)$ according to conditions of said tool (31);

calculating an optimum machining locus (100, 200, 300, 400) for said tool from said selected machining pattern, machining limits (40a, 40b) and machining locus distance $(\ell_1)$; and

moving said tool (31) along said machining locus thus calculated.

3.    A system as claimed in claim 1 or 2, characterized in that said machining locus distance ($\ell_1$) is smaller than the machining width of said tool (31).

4.    A system as claimed in claim 1, 2 or 3, characterized in that a workpiece (40) has at least one of an outside (40a) and inside (40b) machining limit according to a selected machining pattern, said outside or inside machining limit being specified and inputted.

5.    A system as claimed in any one of claims 1 to 4, characterized in that said fundamental machining patterns are face mill machining, end mill plane machining, end mill mount machining, pocket end mill machining, pocket end mill valley machining, pocket end mill mount machining and end mill slot machining patterns.

6.    A system as claimed in any one of claims 1 to 5, characterized in that calculation of said optimum machining locus is carried out by calculating an amount of offset ($\ell_3$) from the machining limit of a workpiece by utilization of the diameter and clearance of said tool and by continuously calculating a machining locus distance.

7.    A system as claimed in any one of claims 1 to 6, characterized in that said optimum machining locus of said tool is selected out of a group consisting of a locus (100) in which the tool is reciprocated for machining in both directions, a locus in which the tool is reciprocated for machining only in one direction, and a circular machining locus (200, 300, 400).

8.    A system as claimed in any one of claims 1 to 7, characterized in that a cutting start point (A) in machining the workpiece (40) is set at a position which is determined by calculating an amount of offset ($\ell_3$) from the machining limit of a workpiece by utilization of the diameter and clearance of said tool.

9.    Numerical control apparatus adapted for use in the system of any one of the preceding claims.

1/6

0088449

FIG. 1

FIG. 2

FIG. 3

FIG. 4

100

40

FIG. 5

40

FIG. 6

31

40

FIG. 7

200

40

0088449

**FIG. 8**

31

40

**FIG. 9**

40

**FIG. 10**

31

40

**FIG. 11**

40

**FIG. 12**

40

**FIG. 13**

40

**FIG. 14**

41

40

**FIG. 15**

41

40

**FIG. 16**

41  42

40

**FIG. 17**

41  42

40

**FIG. 18**

43  42

40

**FIG. 19**

42

43

40

**FIG. 20**

40

44

## FIG. 21

## FIG. 22

## FIG. 23

0088449

## FIG. 24

## FIG. 26

## FIG. 25

## FIG. 27

FIG. 28

FIG. 29